Europäisches Patentamt

European Patent Office

Office européen des brevets

(19)

(11) **EP 1 339 023 A2**

(12) **EUROPEAN PATENT APPLICATION**

(43) Date of publication:
**27.08.2003 Bulletin 2003/35**

(51) Int Cl.⁷: **G06T 15/50**

(21) Application number: **03002632.2**

(22) Date of filing: **10.02.2003**

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(30) Priority: **13.02.2002 JP 2002035151**

(71) Applicant: **NEC Electronics Corporation Kawasaki, Kanagawa 211-8668 (JP)**

(72) Inventor: **Kitamura, Ikuyo,
NEC Micro Systems Ltd.
Kawasaki-shi, Kanagawa (JP)**

(74) Representative: **VOSSIUS & PARTNER
Siebertstrasse 4
81675 München (DE)**

(54) **Method for producing shading effects**

(57) An image processing method which can produce shading effects similar to those of ray tracing without cosine calculations comprises a first step of calculating a distance component which is distance between a screen and model surface; and a second step of adding a shading value obtained based on the distance component and a brightness value inpre-shading color data (color data before shading) to obtain a brightness value in post-shading color data (color data after shading).

FIG.6

**EP 1 339 023 A2**

**Description**

The present invention relates to image processing technology. More particularly, it relates to an image processing method for rendering including shading.

In the field of amusement equipment, with the advancement of computer graphics technology, image processing technology has become increasingly sophisticated. Recently, image processing technology including not only 2D, but also 3D technology has become necessary for portable game machines and the like of which particularly high image quality was not required before. Such image processing generally includes geometry processing and rendering, where the geometry processing involves transforming coordinates of the vertices of a polygon and calculating colors of the vertices through light source calculation to represent how the polygon looks depending on the locations of the vertices, light source, and observer's eye position as well as on colors and normal vectors; and the rendering involves drawing the polygon in specified coordinates, going through hidden surface elimination, shading, and texture mapping, and writing the polygon in bitmap format into video memory (see, for example, Japanese Patent Laid-Open No. 9-198525 paragraphs 0005 to 0018).

Due to demand for reduction in size and weight, resources which can be installed on portable game machines and the like are limited in terms of both hardware and software. Consequently, there is demand for an apparatus and method which can provide realistic representations in a simple way.

Image processing procedures are divided into modeling for defining the shape of an object, rendering for configuring the viewing direction and how the object looks, and drawing for producing output to a display. Shading is done as part of rendering and ray tracing is a rendering technique.

The ray tracing is a technique for depicting a mirror, a·transparent object, or the like by calculating processes (reflections, refractions, shadows, etc.) undergone by rays before they reach an eye from a light source. However, the rays reaching the eye are almost impossible to track if they are traced from the light source. Thus, assuming virtual rays emitted from the eye, they are traced in the direction opposite to the direction of arrival of the real rays.

In this method, after the virtual rays reach the object and undergo reflection or refraction, they are traced further. This makes it possible to depict a reflective and transparent object. A ray is emitted from the eye position to each grid point and the intersection between the ray and the first object it hits is determined. This object is a visible object. At the intersection, shading is done, a reflected ray or transmitted ray is emitted as a secondary ray depending on the nature of the object, and tracing is continued.

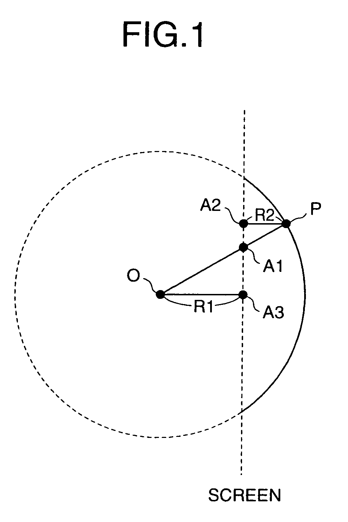

FIG. 1 is a diagram illustrating an example of modeling, namely a method for modeling a fish-eye lens. Effect of a fish-eye lens is modeled by cutting out part of a circle, denoting the center of the circle as point O, and placing (or displaying) an original picture on a screen located at a distance of R1 from point O. Using this model, the address of each pixel position on the screen is converted. Specifically, through modeling, point A1 which corresponds to the pixel position to be converted to point A2 on the screen is determined and its address is converted to the address of point A2. In this way, an image is processed. In the following description, a pixel position obtained after modeling (corresponds to point A2 in FIG. 1) will be referred to as a post-modeling pixel position and a corresponding pixel position before modeling (corresponds to point A1 in FIG. 1) will be referred to as a pre-modeling pixel position.

In FIG. 1, since point O, distance R1, and point A2 which is a post-modeling pixel position are known parameters, distance R2 between the screen and an arc which represents a cross section on a model surface (i. e., the distance between point P on the arc and point A2) is determined, and then the position of point A1 which is the pre-modeling pixel position corresponding to point A2 is identified as an intersection between point P and the screen using relationship of similar triangles (the triangle defined by point A1, point A2, and point P is similar to the triangle defined by point A1, point A3, and point O). Distance R2 is referred to as a distance component at point A2 and defined by the length of the line segment between point A2 and point P, intersections of a straight line drawn perpendicular to the screen from the post-modeling pixel position A2 with the screen and model surface. Incidentally, although FIG. 1 shows an example of 2-dimensional modeling, a similar method can also be used for 3-dimensional modeling by increasing a dimension.

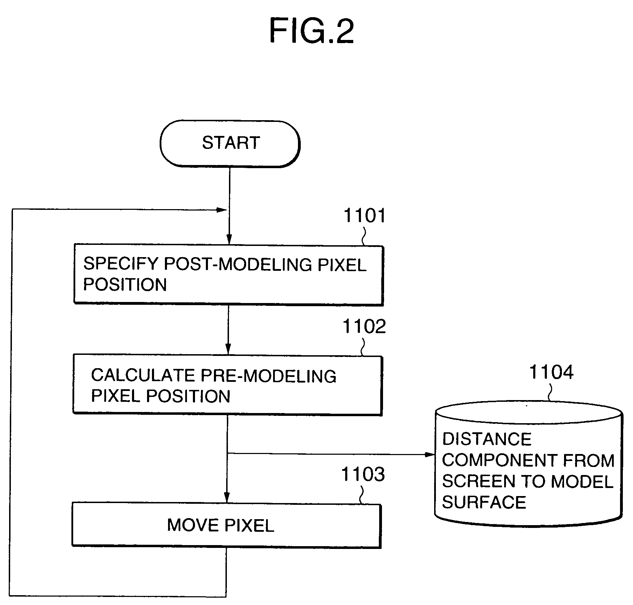

Next, modeling of a circular cylinder will be described. The fish-eye lens has been modeled above starting from one point (point O). A circular cylinder can be expressed if this point is substituted with a straight line (straight line extending perpendicularly to the surface of the paper, in FIG. 1). FIG. 2 is a flowchart illustrating modeling procedures. In Step 1101, a post-modeling pixel position is specified. In Step 1102, a pre-modeling pixel position is calculated using the post-modeling pixel position specified in Step 1101, and a distance component (which corresponds to R2 in FIG. 1) defined by the length of the line segment between two points at which a straight line drawn perpendicular to the screen from the post-modeling pixel position intersects with the screen and model surface is output to a storage 1104 or the like. In Step 1103, the pixel is moved. Steps 1101 to 1103 are repeated for modeling.

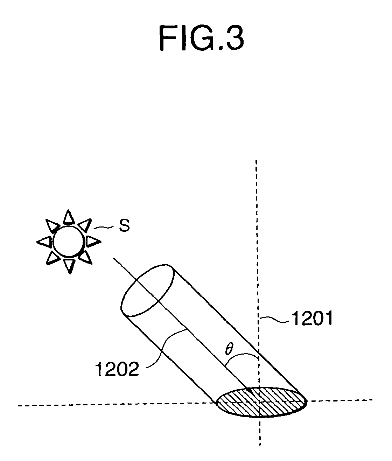

Next, shading will be described with reference to FIG. 3. Shading deals with a phenomenon that the larger the incident angle of rays, the smaller the intensity of the rays hitting a surface of an object than at normal incidence. According to a typical method, the intensity of the rays per unit area of a surface of an object is given by Xcosθ, where θ is the angle between a vector 1202 and normal 1201 of rays from a light source S, and X is the quantity of light per unit area from the light source S.

In rendering, to do shading by means of ray tracing, it is necessary to determine the quantity of light on the surface of an object using the incident angle from the light source to the object. That is, the quantity of light X from the light source S must be multiplied by cosθ. Consequently, shading is often computation-intensive and slows down processing speed.

When the quantity of light per unit area from the light source S is X and the incident angle of light from the light source S to the object is "θ" as shown in FIG. 3, the light receiving area of the object increases while the quantity of light per unit area at the intersection between the light and object decreases to Xcosθ.

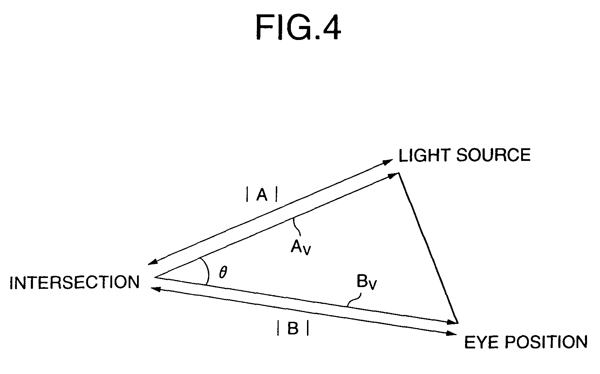

A cosine calculation will be described with reference to FIG. 4. Let Av denote a vector from the intersection to the light source and let Bv denote a vector from the intersection to the eye position, then from the relationship, Av·Bv = |A||B|cosθ, between the inner product (Av·Bv) and absolute values of vectors, the following formula is obtained.

$$\cos\theta = \frac{A_v \cdot B_v}{|A||B|}$$

The denominator of the formula, which is given as the product of length components of vectors Av and Bv, involves multiplication, and requires a large amount of calculation more than addition.

After cosθ is determined, it must be multiplied by the quantity X of light per unit area, further adding to the amount of calculation.

Since shading by a typical ray tracing method involves a large amount of calculation as described above, to do shading at a high speed, an image processing apparatus must be equipped with large hardware such as a multiplier. However, it is not desirable for portable game machines and the like, which are highly expected to be small and lightweight, to need a multiplier or the like.

The present invention has been made in view of the above circumstances. Its object is to provide an image processing method which can produce shading effects similar to those of ray tracing without the need for cosine calculations which involve high-speed multiplications, simplify the configuration of aprocessing apparatus, and reduce processing time.

To achieve the above object, an image processing method according to the present invention comprises a first step of calculating a distance component which is distance between a screen and model surface; and a second step of adding a shading value obtained based on the distance component and a brightness value in pre-shading color data to obtain a brightness value in post-shading color data.

Furthermore, according to a preferred embodiment, the first step may comprise a modeling step of calculating correspondence between pre-modeling pixel position and post-modeling pixel position on the screen as well as a distance component at the post-modeling pixel position; and the second step may comprise a shading value generation step of generating a shading value of a pixel at the post-modeling pixel position based on the distance component at the post-modeling pixel position, and a shading data preparation step of preparing post-shading color data of the pixel at the post-modeling pixel position by adding the shading value of the pixel at the post-modeling pixel position to a brightness value in pre-shading color data of the pixel at the post-modeling pixel position.

The foregoing and other related objects and features of the present invention will become more apparent from the following description taken in conjunction with the accompanying drawings as well as the innovative matters pointed out in the appended claims.

Now, the drawings used in the detailed description of the present invention will be described briefly for better understanding.

FIG. 1 is a diagram illustrating a modeling method;
FIG. 2 is a flowchart illustrating modeling procedures;
FIG. 3 is a diagram illustrating shading;
FIG. 4 is a diagram illustrating how to find a cosine value;
FIG. 5 is a diagram showing a configuration example of an image processing apparatus to illustrate an image processing method according to a first embodiment of the present invention;
FIG. 6 is a flowchart of the image processing method according to the first embodiment of the present invention;
FIG. 7 is a diagram showing a configuration example of an image processing apparatus to illustrate an image processing method according to a second embodiment of the present invention;
FIG. 8 is a flowchart of the image processing method according to the second embodiment of the present invention;
FIG. 9 is a diagram showing a configuration example of an image processing apparatus to illustrate an image processing method according to a third embodiment of the present invention;
FIG. 10 is a flowchart of the image processing method according to the third embodiment of the present invention;
FIG. 11 is a diagram showing a configuration example of an image processing apparatus to illustrate an image processing method according to a fourth embodiment of the present invention;

FIG. 12 is a flowchart of the image processing method according to the fourth embodiment of the present invention;

FIG. 13 is a diagram showing a configuration example of an image processing apparatus to illustrate an image processing method according to a fifth embodiment of the present invention;

FIG. 14 is a flowchart of the image processing method according to the fifth embodiment of the present invention; and

FIG. 15 is a diagram illustrating shading according to the present invention.

Preferred embodiments of the present invention will be described in detail below with reference to the accompanying drawings. Although the present invention is described by way of specific embodiments hereinafter, it should be understood that the present invention is not limited to these embodiments.

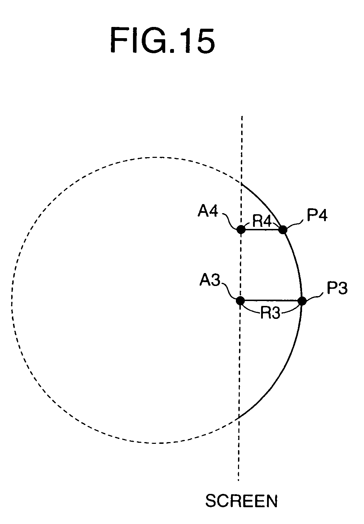

The present invention generates shading values of pixels at post-modeling pixel positions based on distance components each of which is the distance defined by the length of the line segment between two points where a straight line drawn perpendicular to a screen from a post-modeling pixel position intersects with the screen and a model surface (i.e., the distance between screen and model surface), adds the shading values to brightness values in color data (i.e., color data before shading) of the pixels at the post-modeling pixel positions, and outputs the resulting values as brightness values in color data after shading of pixels. In the following description, color data before shading will be referred to as pre-shading color data and color data after shading will be referred to as post-shading color data. According to the present invention, the shading values are determined based on a ratio between a distance component (R4 in FIG. 15) and a predetermined distance component (R3 in FIG. 15) which serves as a reference for brightness. Thus, the present invention eliminates the need for cosine calculations, and thereby simplifies the configuration of an image processing apparatus.

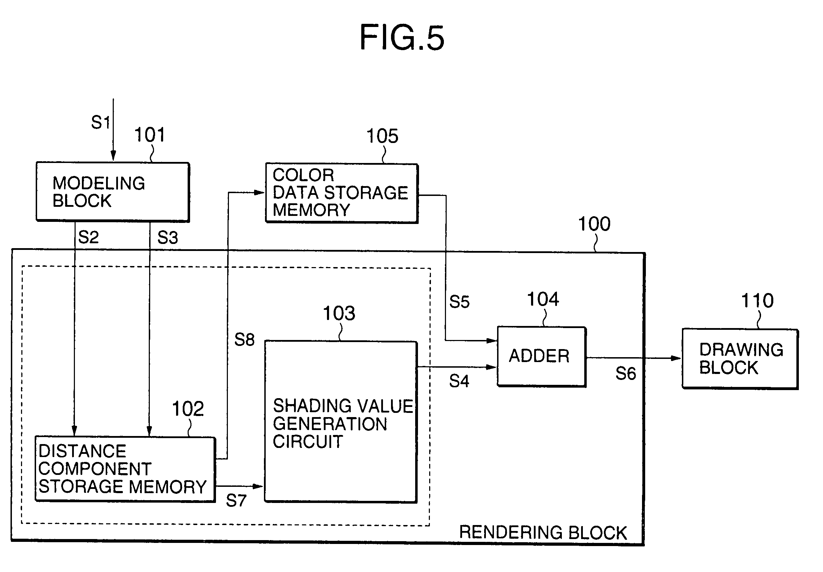

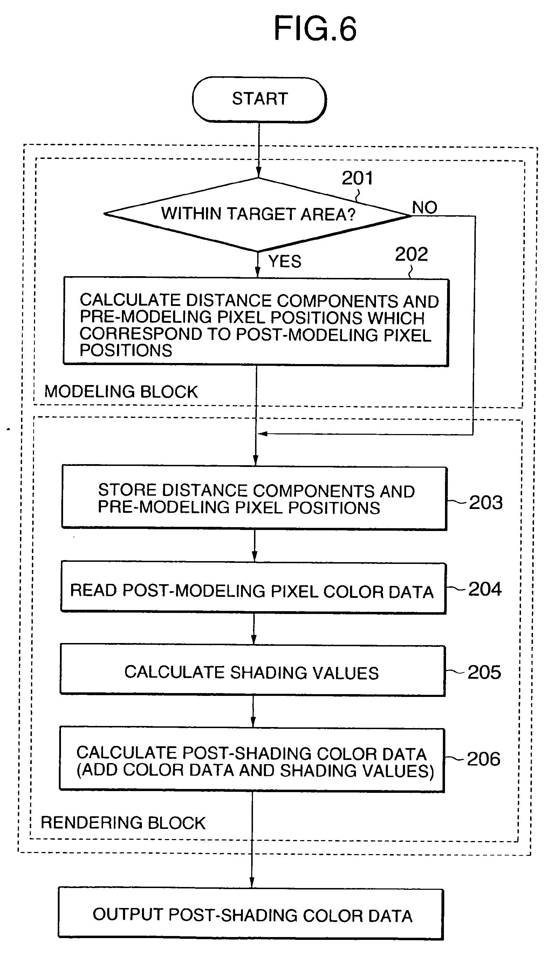

FIGS. 5 and 6 are diagrams illustrating a first embodiment of an image processing method according to the present invention. FIG. 5 is a diagram showing a configuration of a processing apparatus while FIG. 6 is a flowchart of image processing. Referring to FIG. 5, the image processing apparatus comprises a modeling block 101 which receives input of post-modeling pixel positions and back-calculates pre-modeling pixel positions, a distance component storage memory 102 which stores distance components--each of which is the distance de fined by the length of the line segment between two points where a straight line drawn perpendicular to a screen from a post-modeling pixel position intersects with the screen and a model surface--and pre-modeling pixel positions, a shading value generation circuit 103 which calculates shading values for color data using the distance components outputted from the distance component storage memory 102, a color data storage memory 105 which stores color data of image for one frame corresponding to pre-modeling pixel positions, and an adder 104 which adds values determined by the shading value generation circuit 103 to color data that has been read out of the color data storage memory 105 using the addresses of pre-modeling pixel positions (the color data read out is the same as the color data of the original picture and is also the pre-shading color data of the pixels at the post-modeling pixel positions that correspond to pre-modeling pixel positions entered as addresses). Here, as with FIG. 1, the post-modeling pixel position (point A2 in FIG. 1) is determined first and then the corresponding pre-modeling pixel position (point A1 in FIG. 1) is determined by going back along the path: A2, P, A1.

A signal S1 entering the modeling block 101 indicates the post-modeling pixel position. A signal S2 outputted from the modeling block 101 and entering the distance component storage memory 102 indicates the pre-modeling pixel position. A signal S3 outputted from the modeling block 101 and entering the distance component storage memory 102 indicates the distance component which is the distance defined by the length of the line segment between two points where a straight line drawn perpendicular to the screen from the post-modeling pixel position intersects with the screen and the model surface.

A signal S7 read out of the distance component storage memory 102 and entering the shading value generation circuit 103 indicates the distance component which is the distance defined by the length of the line segment between two points where the straight line drawn perpendicular to the screen from the post-modeling pixel position intersects with the screen and the model surface. A signal S8 read out of the distance component storage memory 102 and entering the color data storage memory 105 indicates the pre-modeling pixel position.

A signal S4 outputted from the shading value generation circuit 103 and entering the adder 104 indicates the shading value to be added to the color data of the pixel. A signal S5 read out of the color data storage memory 105 and entering the adder 104 indicates the color data of the pixel at the post-modeling pixel position (hereinafter referred to as the post-modeling pixel color data), and the signal S5 also indicates pre-shading pixel color data. A signal S6 outputted from the adder 104 indicates post-shading pixel color data.

The signal S8 is used as an address signal of the color data storage memory 105. The signal S5, which is the color data read at the address of the color data storage memory 105, is used as the pre-shading color data of the pixel at the post-modeling pixel position (hereinafter referred to as the post-modeling pixel color data).

Next, operation of the image processing apparatus will be outlined with reference to FIG. 5. The modeling block 101 calculates and outputs pre-modeling pixel positions S2 and the distance components S3 based on the post-modeling pixel positions S1 using predetermined modeling means (e.g., for a fish-eye, circular cylinder, etc.).

The distance component storage memory 102 stores pre-modeling pixel positions S2 and distance components S3 for one frame. Also, the distance component storage memory 102 outputs the distance components S7 and pre-modeling pixel positions S8 upon a read request.

The shading value generation circuit 103 outputs the shading values S4 for the color data of the pixels at the post-modeling pixel positions using the distance components S7 outputted from the distance component storage memory 102.

The color data storage memory 105 receives input of the pre-modeling pixel positions S8 as addresses and outputs the color data at the addresses as the pre-shading color data S5 of the pixels at the corresponding post-modeling pixel positions (i.e., as the post-modeling pixel color data).

The adder 104 adds the shading values S4 outputted from the shading value generation circuit 103 to brightness values in the post-modeling pixel color data S5 and outputs the resulting values as brightness values in post-shading pixel color data S6. The post-shading pixel color data S6 is inputted in a drawing block 110 and drawn on a display (not shown).

Next, an image processing method in FIG. 6 according to the first embodiment of the present invention will be described in relation to the operation of the image processing apparatus shown in FIG. 5.

First, the image processing apparatus performs modeling by using the modeling block 101 in Steps 201 and 202. A known method such as the one described with reference to FIG. 1 is used for modeling. For example, the modeling block 101 judges in Step 201 whether each pixel falls within a target area. If it does, the modeling block 101 calculates the pre-modeling pixel position S2 by tracing back from the post-modeling pixel position S1 and calculates the distance component S3, in Step 202. If it is judged in Step 201 that the pixel is outside the target area, the distance component S3 assumes an initial value of 0.

In Step 203, the image processing apparatus stores the pre-modeling pixel positions S2 and the distance components S3 calculated during modeling in the distance component storage memory 102.

In Step 204, using the addresses of the pre-modeling pixel positions S8 in the distance component storage memory 102, the image processing apparatus reads color data at the corresponding addresses in the color data storage memory 105 and outputs it as the post-modeling pixel color data S5 (i.e., as the color data of pixel at the post-modeling pixel position) corresponding to the pre-modeling pixel positions S8.

In Step 205, the image processing apparatus reads the distance components S7 out of the distance component storage memory and calculates the shading values S4. The calculation of the shading values S4 based on the distance component S7 is carried out by the shading value generation circuit 103.

In Step 206, the image processing apparatus makes the adder 104 add the shading values S4 determined in Step 205 and the post-modeling pixel color data S5 determined in Step 204, uses the results of the addition as brightness values in shading, and outputs pixel color data S6 after shading.

The calculation of the shading values in Step 205 of this embodiment will be described with reference to FIG. 15. FIG. 15 is a diagram illustrating an example of shading for a fish-eye lens. The modeled fish-eye lens is shaded in such a way that its brightness will be the highest at the center and decreases with increasing distance from the center. If R3 is the distance component from point P3 on an arc which represents a model surface at the center of the lens to point A3 on a screen and if R4 is the distance component from point P4 on the arc to point A4 on the screen, the distance component R3 at the center of the lens corresponds to the brightest part. The distance component R3 in the brightest part is used as the maximum value to be added to the brightness of the screen in the shading process. If it is taken as 100, the shading value at point A4 on the screen is given by $100 * (R4/R3)$, i.e., the ratio of the distance component R4 to the distance component R3 multiplied by 100.

The adder 104 adds the shading value thus obtained to the brightness value (denoted by B4) of the pixel relocated to point A4, the pro-modeling pixel position. Thus, the brightness value of point A4 after shading is given by

$$(100 * (R4/R3)) + B4$$

Incidentally, the brightness value of point A4 after modeling is a brightness component of the post-modeling pixel color data S5 read out of the color data storage memory 105 using the address of the pre-modeling pixel position S8.

Thus, the present invention can produce shading effects similar to those of ray tracing without cosine calculations. The elimination of the need for cosine calculations makes it possible to simplify circuit configuration and reduce processing time, compared to conventional technologies.

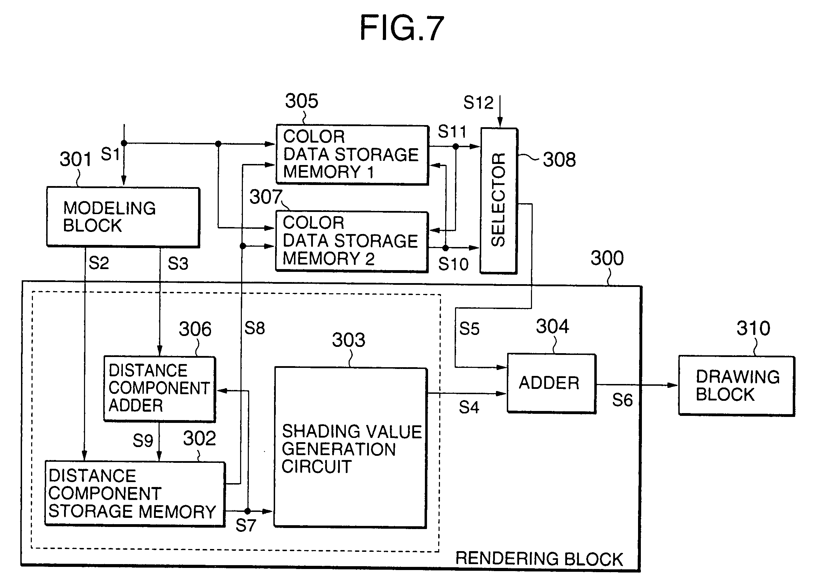

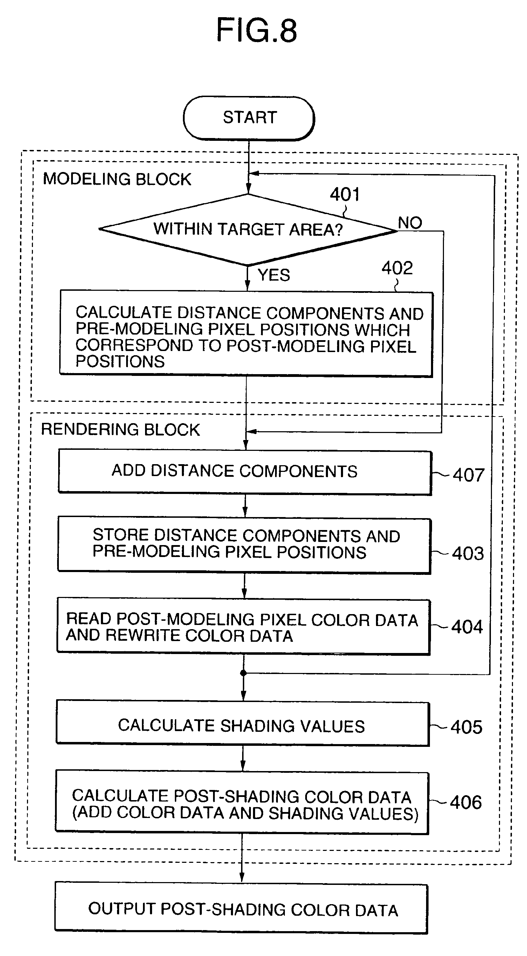

Next, a second embodiment of the present invention will be described. FIGS. 7 and 8 are diagrams illustrating the second embodiment of an image processing method according to the present invention. FIG. 7 is a diagram showing a configuration of a processing apparatus while FIG. 8 is a flowchart of image processing. The second embodiment makes it easy to produce complex graphical representations. In addition to the configuration of the image processing apparatus shown in FIG. 5, an image processing apparatus shown in FIG. 7 comprises, a second color data storage memory 307, selector 308, and distance component adder 306.

Referring to FIG. 7, the image processing apparatus comprises a modeling block 301, the distance component adder 306, a distance component storage memory 302, a shading value generation circuit 303, an adder 304, a first color data storage memory 305, the second color data storage memory 307, and the selector 308.

The modeling block 301, distance component storage memory 302, shading value generation circuit 303, and adder 304 operate in a manner similar to the modeling block 101, distance component storage memory 102, shading value generation circuit 103, and adder 104 shown in FIG. 5, respectively.

The distance component adder 306 is a circuit for calculating distance components. It adds a distance component S3 outputted by the modeling block 301 and a distance component S7 outputted by the distance component storage memory 302 and outputs the result as a distance component signal S9.

An input signal S1 entering the modeling block 301 indicates a post-modeling pixel position. A signal S2 outputted from the modeling block 301 and entering the distance component storage memory 302 indicates a pre-modeling pixel position. A signal S3 outputted from the modeling block 301 and entering the distance component adder 306 indicates a distance component.

The signal S9 outputted from the distance component adder 306 and entering the distance component storage memory 302 indicates a distance component (distance component obtained by adding the signal S3 outputted from the modeling block 301 and signal S7 outputted from the distance component storage memory 302).

The signal S7 outputted from the distance component storage memory 302 and entering the shading value generation circuit 303 and distance component adder 306 indicates a distance component. A signal S8 outputted from the distance component storage memory 302 and entering the first color data storage memory 305 and the second color data storage memory 307 indicates a pre-modeling pixel position.

A signal S4 outputted from the shading value generation circuit 303 and entering the adder 304 indicates a shading value to be added to pixel color data.

A signal S11 read out of the first color data storage memory 305 and entering the second color data storage memory 307 and selector 308 indicates pixel color data which has been modeled based on color data stored in the first color data storage memory. A signal S10 read out of the second color data storage memory 307 and entering the first color data storage memory 305 and the selector 308 indicates pixel color data which has been modeled based on color data stored in the second color data storage memory. A signal S12 entering the selector 308 is a selection control signal for the selector. It controls which of the incoming signal S11 and signal S10 the selector 308 should select as its output.

A signal S5 outputted from the selector 308 and entering the adder 304 indicates post-modeling pixel color data selected by the selector 308. A signal S6 outputted from the adder 304 indicates post-shading pixel color data.

At the time of the first modeling iteration, all the distance components in the distance component storage memory are initialized to 0.

The first color data storage memory 305 and second color data storage memory 307 have addresses corresponding to pixel positions and store color data for each pixel.

Color data read and write operations are performed alternately on the first color data storage memory 305 and second color data storage memory 307. When the first color data storage memory 305 undergoes a read operation, the second color data storage memory 307 undergoes a write operation. When the second color data storage memory 307 undergoes a read operation, the first color data storage memory 305 undergoes a write operation.

During read operations, the first color data storage memory 305 and second color data storage memory 307 each output the color data stored at addresses which correspond to the pre-modeling pixel positions S8 outputted from the distance component storage memory 302.

During write operations, the first color data storage memory 305 and second color data storage memory 307 each write the color data outputted from the other memory to addresses which correspond to the post-modeling pixel positions S1.

The output signal S5 of the selector 308 is color data actually outputted as the color data of the pixel at the post-modeling pixel position (post-modeling pixel color data), being selected by the selection control signal S12 from the pixel color data S10 and S11.

Next, an image processing method in FIG. 8 according to the second embodiment of the present invention will be described in relation to the operation of the image processing apparatus shown in FIG. 7.

According to this embodiment, Step 204 in the flowchart of FIG. 6 is substituted with Step 404 in which post-modeling pixel color data is read out and color data is rewritten. Also, this embodiment additionally contains Step 407 in which distance components are added.

First, the image processing apparatus performs modeling by using the modeling block 301 in Steps 401 and 402. Again, a known method such as the one described with reference to FIG. 1 is used for modeling. In Step 402, the pre-modeling pixel positions S2 are calculated by tracing back from the post-modeling pixel positions S1. Also, the distance components S3 are calculated.

Next, in Step 407, the distance component adder 306 calculates the distance components S9 by adding the distance components S3 read out of the modeling block 301 and the distance components S7 read out of the distance component storage memory 302.

Next, in Step 403, the image processing apparatus stores the pre-modeling pixel positions S2 and distance components S9 calculated during modeling in the distance component storage memory 302.

Next, in Step 404, the image processing apparatus reads and rewrites color data using the two image color data storage memories 305 and 307. When the first color data storage memory 305 is selected as the read memory, the first color data storage memory 305 outputs the color data at the addresses which correspond to the pre-modeling pixel positions S8 as the color data at the corresponding post-modeling pixel positions via the selector 308. Meanwhile, the second color data storage memory 307 stores the color data read out of the first color data storage memory 305 to the addresses which correspond to the post-modeling pixel positions S1. By selecting the second color data storage memory 307 as the read memory when color data is read out the next time, color data in the image color data storage memories is rewritten effectively.

Similarly, when the second color data storage memory 307 is selected as the read memory, the second color data storage memory 307 outputs the color data at the addresses which correspond to the pre-modeling pixel positions S8 as the color data at the corresponding post-modeling pixel positions via the selector 308 in Step 404. The first color data storage memory 305 stores the color data read out of the second color data storage memory 307, using the addresses which correspond to the post-modeling pixel positions S1. Then, the image processing apparatus goes to Step 404 and returns to Step 401 where it runs the next modeling iteration by using the modeling block 301.

In Step 405, the image processing apparatus reads the distance components S7 out of the distance component storage memory and calculates the shading values S4. The calculation of the shading values S4 based on the distance components S7 is carried out by the shading value generation circuit 303.

Next, in Step 406, the image processing apparatus makes the adder 104 add the shading values S4 determined in Step 405 and the post-modeling pixel color data S5 determined in Step 404 and outputs the results of the addition. Thus, in Step 406, the image processing apparatus outputs shaded pixel color data S6.

Effect of this embodiment will be described citing modeling of a fish-eye lens. After the distance components in the distance component storage memory 302 are initialized to 0, when Steps 401 to 406 are carried out with the first color data storage memory 305 selected as the read memory, the pixels composing the original picture are shaded in such a way that they become darker with increasing distance form the center as they approach the periphery, as is the case with the first embodiment, resulting in an image which looks as if it were sticking to the surface of a sphere. Then, returning from Step 404 to Step 401, Steps 401 to 406 are carried out again with the second color data storage memory 307 selected as the read memory and with the first image used as the original (pre-shading) picture. As a result, the pixels composing the original picture are shaded in such a way that pixels become darker with increasing distance form the center as they approach the periphery. Besides, (since the distance components obtained in the first modeling iteration and the distance components obtained in the second modeling iteration are added,) the resulting image is drawn in such a way that the contrast between the center and periphery is enhanced. In other words, the resulting image is practically such that both modeling and shading have been repeated twice with respect to the original picture.

Thus, by selecting the image color data storage memories 305 and 307 alternately as the read memory and repeating Steps 401 to 406 a number of times, it is possible to easily achieve a graphical representation in which, for example, patterns on the surface of a sphere moves from center to periphery, increasing the brilliance in center with time.

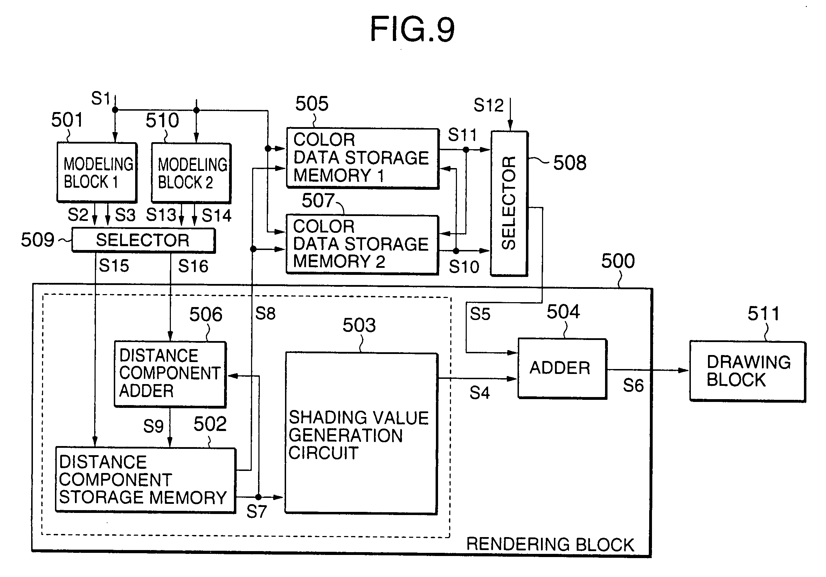

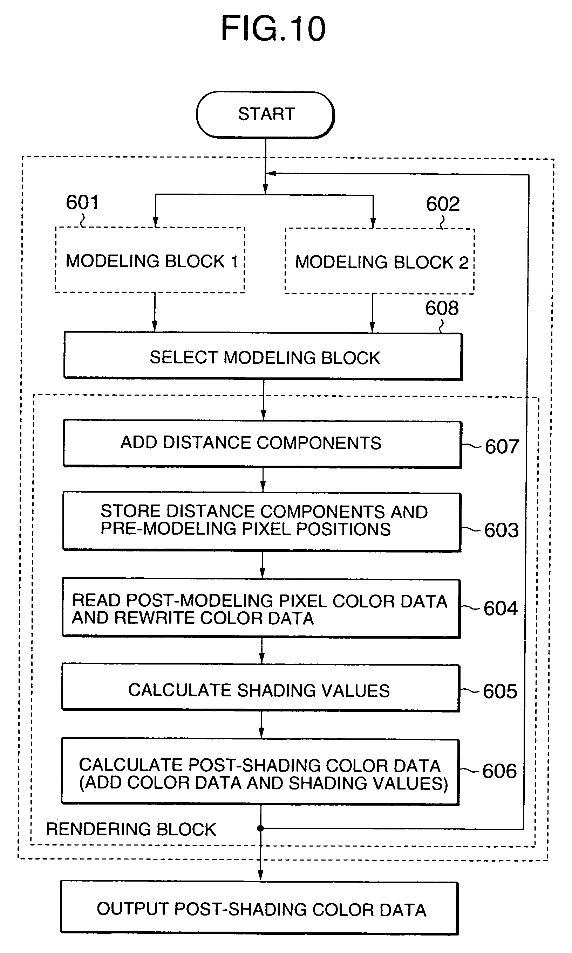

Next, a third embodiment of the present invention will be described. FIGS. 9 and 10 are diagrams illustrating the third embodiment of an image processing method according to the present invention. FIG. 9 is a diagram showing a configuration of a processing apparatus while FIG. 10 is a flowchart of image processing. Referring to FIG. 9, in addition to the configuration of the image processing apparatus shown in FIG. 7, the image processing apparatus according to this embodiment comprises another modeling block for repeating different types of modeling and displaying the results on one screen and a selector for selecting a modeling block.

Referring to FIG. 9, the image processing apparatus comprises a first modeling block 501, second modeling block 510, selector 509 which receives outputs from the first modeling block 501 and second modeling block 510 and outputs one of them selectively, distance component storage memory 502, distance component adder 506, shading value generation circuit 503, adder 504, first color data storage memory 505, second color data storage memory 507, and selector 508 which receives outputs from the first color data storage memory 505 and second color data storage memory 507 and outputs one of them selectively. Of these, the first modeling block 501, distance component storage memory 502, shading value generation circuit 503, adder 504, first color data storage memory 505, distance component adder 506, second color data storage memory 507, and selector 508 are configured similarly to the modeling block 301, distance component storage memory 302, shading value generation circuit 303, adder 304, first color data storage memory 305, distance component adder 306, second color data storage memory 307, and selector 308, respectively. Thus, the image processing circuit in FIG. 9 comprises the second modeling block 510 and selector 509 in addition to the configuration of the image processing circuit shown in FIG. 7.

Based on the post-modeling pixel position S1 and using a different type of modeling than the first modeling block 501, the second modeling block 510 outputs a pre-modeling pixel position S14 and distance component S13 calculated during modeling. Even if the second modeling differs from the first modeling such as when modeling a fish-eye lens and circular cylinder, the distance component S13 is defined by the length of the line segment between two points where a straight line drawn perpendicular to the screen from the post-modeling pixel position intersects with the screen and the model surface.

The selector 509 outputs a pre-modeling pixel position S15 and distance component S16 depending on which is selected, the output from the first modeling (the distance component S3 and pre-modeling pixel position S2) or output from the second modeling (the distance component S13 and pre-modeling pixel position S14).

The distance component storage memory 502 stores distance components and post-modeling pixel positions. One of input signals to the distance component storage memory 502 represents the distance component S9 and the other input signal represents the pre-modeling pixel position S15. One of output signals from the distance component storage memory 502 represents the distance component S7 read out and other output signal represents the pre-modeling pixel position S8 read out.

The distance component adder 506 receives the distance component S16 outputted from the selector 509 and the distance component S7 read out of the distance component storage memory 502, adds the two distance components, and outputs the result as the distance component S9 to the distance component storage memory.

The shading value generation circuit 503 operates in a manner similar to the shading value generation circuit 303 shown in FIG. 7. The adder 504 operates in a manner similar to the adder 304. The first color data storage memory 505 operates in a manner similar to the first color data storage memory 305. The second color data storage memory 507 operates in a manner similar to the second color data storage memory 307. Selector 508 operates in a manner similar to the selector 308. Thus, description of these components will be omitted.

FIG. 10 is a flowchart of the image processing method according to the third embodiment of the present invention. This embodiment differs from the second embodiment in that a modeling block to be used is selected from a plurality of modeling blocks 601 and 602 (which correspond to the modeling blocks 501 and 510 in FIG. 9). Except for the number of modeling blocks and Step 608 in which a type of modeling is selected, Steps 607, 603, 604, 605, and 606 correspond to Steps 407, 403, 404, 405, and 406 in the second embodiment and perform operations similar to those of the corresponding steps.

First, in Steps 601 and 602, the image processing apparatus performs modeling simultaneously by using the plurality of modeling blocks. Again, a known method such as the one described with reference to FIG. 1 is used for modeling. In Step 601, the pre-modeling pixel positions S2 are calculated by tracing back from the post-modeling pixel positions S1. Also, the distance components S3 are calculated. In Step 602, the pre-modeling pixel positions S13 are calculated by tracing back from the post-modeling pixel positions S1. Also, the distance components S14 are calculated.

Next, in Step 608, the image processing apparatus selects a modeling block to be used for modeling. The distance components and pre-modeling pixel positions outputted from the selected modeling block are sent to Step 607 as the distance components and S16 pre-modeling pixel positions S15 to be used for rendering.

In Step 607, the distance components S16 are added to the distance components S7 outputted from the distance component storage memory 502 by the distance component adder 506 to produce the distance components S9.

Next, in Step 603, the image processing apparatus stores the distance components S9 and pre-modeling pixel positions S15 in the distance component storage memory 502.

Next, in Step 604, the image processing apparatus reads and rewrites color data using the two image color data storage memories 505 and 507. When first color data storage memory 505 is selected as the readmemory, the first color data storage memory 505 outputs the color data at the addresses which correspond to the pre-modeling pixel positions S8 as the color data at the corresponding post-modeling pixel positions via the selector 508. At this time, the second color data storage memory 507 stores the color data read out of the first color data storage memory 505 to the addresses which correspond to the post-modeling pixel positions S1.

Similarly, when the second color data storage memory 507 is selected as the read memory, the second color data storage memory 507 outputs the color data at the addresses which correspond to the pre-modeling pixel positions S8 as the color data at the corresponding post-modeling pixel positions via the selector 508 in Step 604. The first color data storage memory 505 writes the color data read out of the second color data storage memory 507 to the addresses which correspond to the post-modeling pixel positions S1.

In Step 605, the image processing apparatus reads the distance components S7 out of the distance component storage memory and calculates the shading values S4. The calculation of the shading values S4 based on the distance components S7 is carried out by the shading value generation circuit 503.

Next, in Step 606, the image processing apparatus adds the shading values S4 determined in Step 605 and the post-modeling pixel color data S5 determined in Step 604 using the adder 504 and outputs the results of the addition. Thus, the image processing apparatus outputs shaded pixel color data S6 in Step 606, and then returns to Step 601 and Step 602.

By preparing a plurality of modeling blocks for different types of modeling, this embodiment makes it possible to generate a shaded image which contains overlapping or aligned objects of different shapes from an original picture.

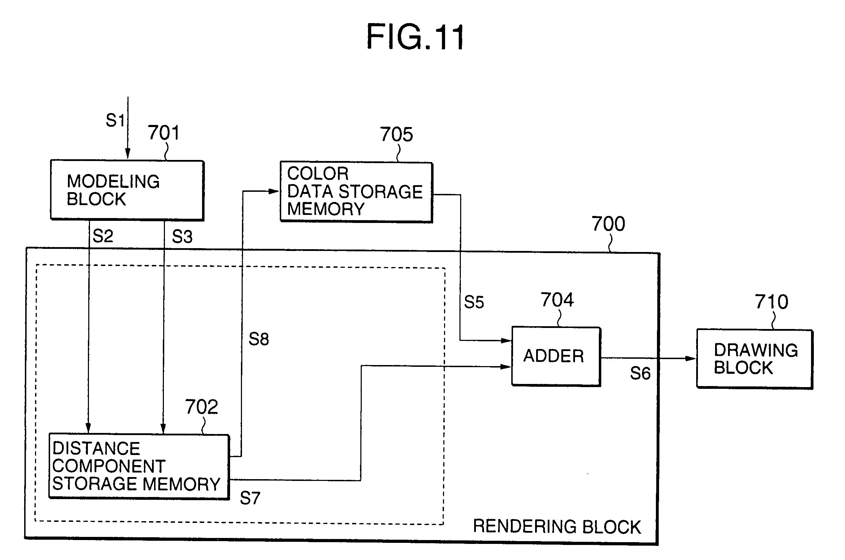

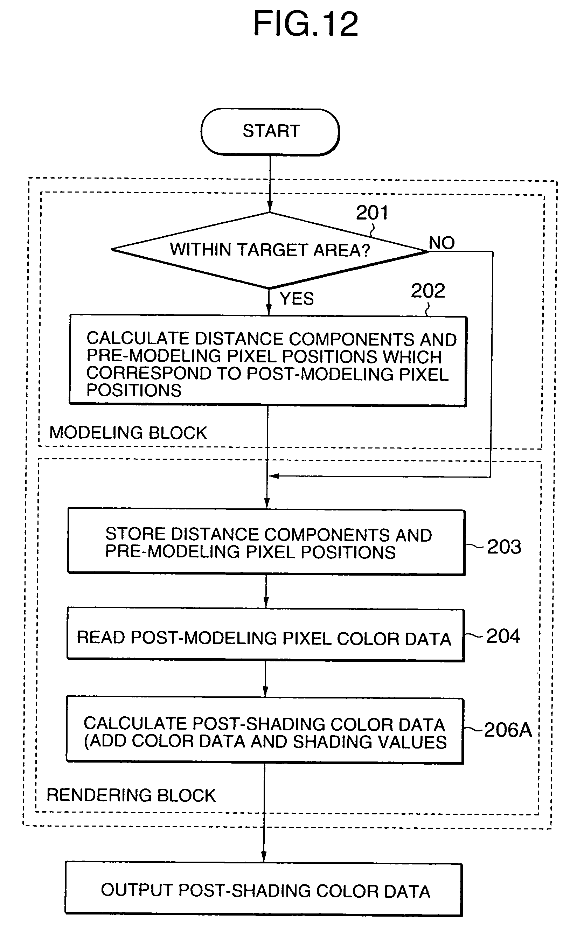

Next, a fourth embodiment of the present invention will be described. FIGS. 11 and 12 are diagrams illustrating the fourth embodiment of an image processing method according to the present invention. FIG. 11 is a diagram showing a configuration of a processing apparatus while FIG. 12 is a flowchart of image processing. The fourth embodiment differs from the first embodiment in that post-shading color data is prepared by adding distance components as shading values to color data without generating special shading values. Referring to FIG. 11, a distance component S7 read out of a distance component storage memory 702 is inputted as a shading value directly into an adder 704. The adder 704 generates post-shading color data by adding a distance component S7 to color data S5 outputted from an color data storage memory 705. Incidentally, a modeling block 701, the distance component storage memory 702, the adder 704, the color data storage memory 705, and a drawing block 710 in FIG. 11 respectively correspond to the modeling block 101, distance component storage memory 102, adder 104, color data storage memory 105, and drawing block 110 in FIG. 5. Their operation is the same as the corresponding components in FIG. 5, and thus description thereof will be omitted.

FIG. 12 is a flowchart illustrating the fourth embodiment of the image processing method according to the present invention. This embodiment differs from the first embodiment shown in FIG. 6 in that Step 205 in FIG. 6 has been deleted and that Step 206 has been substituted with Step 206A in which distance components are added to color data. The other steps are the same as those in FIG. 6, and thus description thereof will be omitted.

Since there is not need to calculate shading values using a formula, this embodiment can eliminate a shading value generation circuit, and thus allows for size reduction.

Incidentally, although the fourth embodiment has been described as an application to the first embodiment, this technical idea is also applicable to the second and third embodiment. When it is applied to the second embodiment, the shading value generation circuit 303 shown in FIG. 7 is removed and the signal S7 is inputted in the adder 304 instead of the signal S4. Also, Step 405 in FIG. 8 is deleted and distance components are added instead of shading values in Step 406. When the technical idea is applied to the third embodiment, the shading value generation circuit 503 shown in FIG. 9 is removed and the signal S7 is inputted in the adder 504 instead of the signal S4. Also, Step 605 in FIG. 10 is deleted and distance components are added instead of shading values in Step 606.

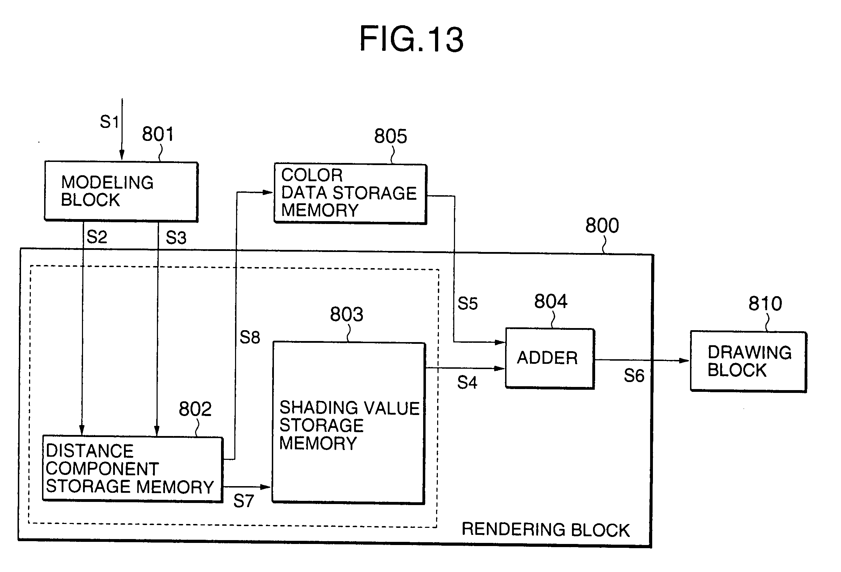

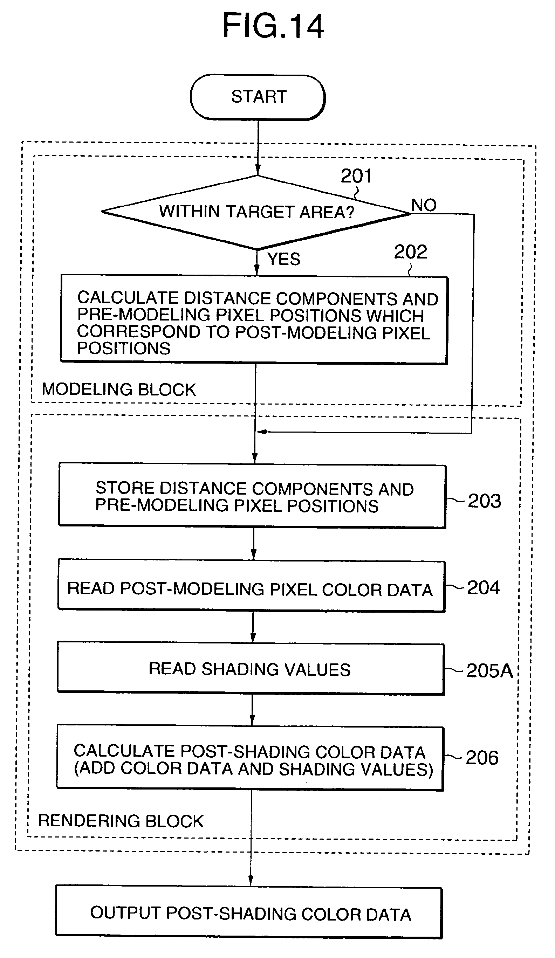

Next, a fifth embodiment of the present invention will be described. FIGS. 13 and 14 are diagrams illustrating the fifth embodiment of an image processing method according to the present invention. FIG. 13 is a diagram showing a configuration of a processing apparatus while FIG. 14 is a flowchart of image processing. The fifth embodiment differs from the first embodiment in that shading values are stored in a table and retrieved based on corresponding distance components. Referring to FIG. 13, in addition to the shading value generation circuit 103 shown in FIG. 5, the image processing apparatus according to this embodiment comprises a shading value memory 803 whose addresses correspond to distance components S7 and which stores shading value S4 data for pixel color data. In other words, out of prestored tabular shading values for pixel color data, the shading value memory 803 outputs the shading values S4 corresponding to inputted distance components S7. Incidentally, a modeling block 801, distance component storage memory 802, adder 804, color data storage memory 805, and drawing block 810 in FIG. 13 respectively correspond to the modeling block 101, distance component storage memory 102, adder 104, color data storage memory 105, and drawing block 110 in FIG. 5. Their operation is the same as the corresponding components in FIG. 5, and thus description thereof will be omitted.

FIG. 14 is a flowchart illustrating the fifth embodiment of the image processing method according to the present invention. This embodiment differs from the first embodiment shown in FIG. 6 in that Step 205 in which shading values S4 are calculated from inputted distance components S7 using the shading value generation circuit 103 in FIG. 6 has been substituted with Step 205A in which shading values S4 stored in tabular form in the shading value memory 803 are read out using addresses which correspond to distance components S7. The other steps are the same as those in FIG. 6, and thus description thereof will be omitted.

Incidentally, although the fifth embodiment has been described as an application to the first embodiment, this technical idea is also applicable to the second and third embodiment. When it is applied to the second embodiment, the shading value generation circuit 303 shown in FIG. 7 is substituted with a shading value storage memory from which shading values are read using addresses which correspond to distance components S7. Also, Step 406 in FIG. 8 is changed so that shading values are read out of the shading value storage memory which stores shading values. When the technical idea is applied to the third embodiment, the shading value generation circuit 503 shown in FIG. 9 is substituted with a shading value storage memory from which shading values are read using addresses which correspond to distance components S7. Also, Step 606 in FIG. 10 is changed so that shading values are read out of the shading value storage memory which stores shading values.

As described above, according to the present invention, distance components between a screen and model surface calculated during modeling are reused during rendering. Also, brightness is calculated during shading simply by adding values obtained from distance components to brightness values read as color data at post-modeling pixel positions. Consequently, shading effects similar to those of ray tracing can be produced easily without the need for cosine calculations. This simplifies an image processing apparatus and reduces processing time.

## Claims

1. An image processing method comprising:

    a first step of calculating a distance component which is distance between a screen and model surface; and
    a second step of adding a shading value obtained based on said distance component and a brightness value in pre-shading color data to obtain a brightness value in post-shading color data.

2. The image processing method according to claim 1; wherein:

    said first step comprises a modeling step of calculating pre-modeling pixel position which correspond to post-modeling pixel position on said screen as well as a distance component at said post-modeling pixel position; and
    said second step comprises:

      a shading value generation step of generating a shading value of a pixel at said post-modeling pixel position based on said distance component at said post-modeling pixel position, and
      a shading data preparation step of preparing post-shading color data of said pixel at said post-modeling pixel position by adding said shading value of said pixel at said post-modeling pixel position to a brightness value in pre-shading color data of said pixel at said post-modeling pixel position.

3. The image processing method according to claim 2; wherein said modeling step sets post-modeling pixel position on said screen, finds an intersection between a perpendicular line from said post-modeling pixel position and said model surface, determines pre-modeling pixel position using said intersection, and outputs a distance between said post-modeling pixel position and said intersection as said distance component to said second step.

4. The method according to claim 2 or 3; wherein said second step further comprises:

    a distance component storing step of storing said pre-modeling pixel position and said distance component at said post-modeling pixel position in a distance component storage memory; and
    a color data reading step of receiving said pre-modeling pixel position as an address in an color data storage memory which stores color data of pixels and outputting read data as pre-shading color data at post-modeling pixel position which corresponds to said pre-modeling pixel position.

5. The image processing method according to claim 4; wherein in said second step:

    said distance component storing step adds said distance component at said post-modeling pixel position and a distance component stored in said distance component storage memory and stores the result in said distance component storage memory; and
    said color data reading step receives said pre-modeling pixel position as an address in said color data storage memory, outputs read data as pre-shading color data at said post-modeling pixel position which corresponds to said pre-modeling pixel position, and writes said read data using an address which corresponds to said post-modeling pixel position.

6. The image processing method according to claim 4; wherein in said second step:

    said distance component storing step adds said distance component at said post-modeling pixel position and a distance component stored in said distance component storage memory and stores the result in said distance component storage memory; and
    said color data reading step:

uses a first color data storage memory and a second color data storage memory, and receives said pre-modeling pixel position as an address in said first color data storage memory, and when outputting read data as pre-shading color data at post-modeling pixel position which corresponds to said pre-modeling pixel position, writes said read data into said second color data storage memory using an address which corresponds to said post-modeling pixel position, or

receives said pre-modeling pixel position as an address in said second color data storage memory, and when outputting read data as pre-shading color data at post-modeling pixel position which corresponds to said pre-modeling pixel position, writes said read data into said first color data storage memory using an address which corresponds to said post-modeling pixel position.

**7.** The image processing method according to claim 6; wherein said first step comprises:

a plurality of modeling steps of calculating pre-modeling pixel position which correspond to post-modeling pixel position on said screen as well as a distance component at said post-modeling pixel position by using models different from each other; and
a modeling selection step of selecting said pre-modeling pixel position and said distance component calculated in one of said plurality of modeling steps.

**8.** The method according to any one of claims 2 to 7; wherein said shading value generation step calculates said shading value using a predetermined formula which has a positive correlation between said shading value and said distance component.

**9.** The method according to any one of claims 2 to 8; wherein said shading value generation step calculates said shading value based on the ratio of said distance component at said post-modeling pixel position to a distance component with a predetermined value which serves as a reference.

**10.** The method according to any one of claims 2 to 9; wherein said shading value generation step reads said shading value from a provided table using an address which corresponds to said distance component at said post-modeling pixel position.

**11.** The method according to any one of claims 1 to 10; wherein:

said first step comprises a modeling step of calculating correspondence between pre-modeling pixel position and post-modeling pixel position on said screen as well as a distance component at said post--modeling pixel position; and

said second step comprises a shading data preparation step of preparing post-shading color data of said pixel at said post-modeling pixel position by adding said shading value of said pixel at said post-modeling pixel position to a brightness value in pre-shading color data of said pixel at said post-modeling pixel position.

# FIG.1

SCREEN

# FIG.2

START

1101

SPECIFY POST-MODELING PIXEL POSITION

1102

CALCULATE PRE-MODELING PIXEL POSITION

1104

DISTANCE COMPONENT FROM SCREEN TO MODEL SURFACE

1103

MOVE PIXEL

# FIG.3

# FIG.4

# FIG.5

EP 1 339 023 A2

# FIG.6

```
                    ┌─────────┐
                    │  START  │
                    └────┬────┘
                         │
     ┌───────────────────┼─────────────────────────┐
     │  ┌────────────────┼──────────────────────┐   │
     │  │                │              201      │   │
     │  │              ◇─┴─◇          ╱          │   │
     │  │        ◇─────────────────◇  NO         │   │
     │  │        ◇ WITHIN TARGET AREA? ◇─────────│───│──┐
     │  │        ◇─────────────────◇             │   │  │
     │  │              ◇─┬─◇                      │   │  │
     │  │                │ YES        202         │   │  │
     │  │                │           ╱            │   │  │
     │  │  ┌─────────────┴──────────────────┐    │   │  │
     │  │  │ CALCULATE DISTANCE COMPONENTS AND │  │   │  │
     │  │  │ PRE-MODELING PIXEL POSITIONS WHICH│  │   │  │
     │  │  │ CORRESPOND TO POST-MODELING PIXEL │  │   │  │
     │  │  │ POSITIONS                         │  │   │  │
     │  │  └─────────────┬──────────────────┘    │   │  │
     │  │ MODELING BLOCK │                        │   │  │
     │  └────────────────┼────────────────────────┘   │  │
     │  ┌────────────────┼───────────────────────┐    │  │
     │  │                │◄──────────────────────────────┘
     │  │  ┌─────────────┴──────────────────┐    │    │
     │  │  │ STORE DISTANCE COMPONENTS AND   │    │    │
     │  │  │ PRE-MODELING PIXEL POSITIONS    │──── 203 │
     │  │  └─────────────┬──────────────────┘    │    │
     │  │                │                       │    │
     │  │  ┌─────────────┴──────────────────┐    │    │
     │  │  │ READ POST-MODELING PIXEL COLOR DATA│─ 204 │
     │  │  └─────────────┬──────────────────┘    │    │
     │  │                │                       │    │
     │  │  ┌─────────────┴──────────────────┐    │    │
     │  │  │ CALCULATE SHADING VALUES        │──── 205 │
     │  │  └─────────────┬──────────────────┘    │    │
     │  │                │                       │    │
     │  │  ┌─────────────┴──────────────────┐    │    │
     │  │  │ CALCULATE POST-SHADING COLOR DATA │  │    │
     │  │  │ (ADD COLOR DATA AND SHADING VALUES)│─206  │
     │  │  └─────────────┬──────────────────┘    │    │
     │  │ RENDERING BLOCK│                        │    │
     │  └────────────────┼───────────────────────┘    │
     └───────────────────┼────────────────────────────┘
                         │
          ┌──────────────┴──────────────────┐
          │ OUTPUT POST-SHADING COLOR DATA   │
          └──────────────────────────────────┘
```

FIG.7

# FIG.8

```
                    ┌─────────┐
                    │  START  │
                    └─────────┘
                         │
  ┌──────────────────────┼──────────────────────────────────┐
  │ MODELING BLOCK        │                                   │
  │              ┌────────▼────────┐          401             │
  │             ╱                   ╲         ◞           NO  │
  │            ╱  WITHIN TARGET AREA? ╲──────────────────┐    │
  │            ╲                      ╱                   │    │
  │             ╲                   ╱                     │    │
  │              └────────┬────────┘                      │    │
  │               YES     │           402                 │    │
  │          ┌────────────▼──────────────────────┐        │    │
  │          │ CALCULATE DISTANCE COMPONENTS AND  │        │    │
  │          │ PRE-MODELING PIXEL POSITIONS WHICH │        │    │
  │          │ CORRESPOND TO POST-MODELING PIXEL  │        │    │
  │          │ POSITIONS                          │        │    │
  │          └───────────────┬───────────────────┘        │    │
  └──────────────────────────┼───────────────────────────┼────┘
  ┌──────────────────────────┼───────────────────────────┼────┐
  │ RENDERING BLOCK           │◄──────────────────────────┘    │
  │          ┌────────────────▼──────────────────┐             │
  │          │      ADD DISTANCE COMPONENTS       │~407         │
  │          └────────────────┬──────────────────┘             │
  │          ┌────────────────▼──────────────────┐             │
  │          │ STORE DISTANCE COMPONENTS AND      │~403         │
  │          │ PRE-MODELING PIXEL POSITIONS       │             │
  │          └────────────────┬──────────────────┘             │
  │          ┌────────────────▼──────────────────┐             │
  │          │ READ POST-MODELING PIXEL COLOR DATA│~404         │
  │          │ AND REWRITE COLOR DATA             │             │
  │          └────────────────┬──────────────────┘             │
  │                           │                                 │
  │          ┌────────────────▼──────────────────┐             │
  │          │      CALCULATE SHADING VALUES      │~405         │
  │          └────────────────┬──────────────────┘             │
  │          ┌────────────────▼──────────────────┐             │
  │          │ CALCULATE POST-SHADING COLOR DATA  │~406         │
  │          │ (ADD COLOR DATA AND SHADING VALUES)│             │
  │          └────────────────┬──────────────────┘             │
  └───────────────────────────┼────────────────────────────────┘
             ┌────────────────▼──────────────────┐
             │   OUTPUT POST-SHADING COLOR DATA   │
             └────────────────────────────────────┘
```

# FIG.9

EP 1 339 023 A2

# FIG.10

```
                    ┌──────────────┐
                    │    START     │
                    └──────────────┘
                           │
        ┌──────────────────┴──────────────────┐
   601  │                                      │  602
 ┌ ─ ─ ─│─ ─ ─ ─ ─ ─ ─ ─ ┐      ┌ ─ ─ ─ ─ ─ ─ ─│─ ─ ─ ─ ─ ┐
 │  MODELING BLOCK 1      │      │  MODELING BLOCK 2        │
 └ ─ ─ ─│─ ─ ─ ─ ─ ─ ─ ─ ┘      └ ─ ─ ─ ─ ─ ─ ─│─ ─ ─ ─ ─ ┘
        │                                       │   608
        └───────────────────┬───────────────────┘
                ┌────────────────────────┐
                │  SELECT MODELING BLOCK  │
                └────────────────────────┘
                           │
                ┌────────────────────────┐
                │ ADD DISTANCE COMPONENTS │───607
                └────────────────────────┘
                           │
         ┌────────────────────────────────┐
         │ STORE DISTANCE COMPONENTS AND   │───603
         │ PRE-MODELING PIXEL POSITIONS    │
         └────────────────────────────────┘
                           │
         ┌────────────────────────────────┐
         │ READ POST-MODELING PIXEL COLOR  │───604
         │ DATA AND REWRITE COLOR DATA     │
         └────────────────────────────────┘
                           │
         ┌────────────────────────────────┐
         │   CALCULATE SHADING VALUES      │───605
         └────────────────────────────────┘
                           │
         ┌────────────────────────────────┐
         │ CALCULATE POST-SHADING COLOR    │───606
         │ DATA (ADD COLOR DATA AND        │
         │ SHADING VALUES)                 │
         └────────────────────────────────┘
   RENDERING BLOCK         │
                           │
         ┌────────────────────────────────┐
         │ OUTPUT POST-SHADING COLOR DATA  │
         └────────────────────────────────┘
```

# FIG.11

# FIG.12

```
              ┌─────────────┐
              │    START    │
              └─────────────┘
                     │
                     ▼
        ╔═══════════════════════════════════════╗
        ║            201                         ║
        ║         ◇─────────────◇        NO      ║
        ║   ◇ WITHIN TARGET AREA? ◇─────────┐    ║
        ║         ◇─────────────◇           │    ║
        ║              │                    │    ║
        ║              │ YES      202        │    ║
        ║   ┌──────────────────────────────┐│    ║
        ║   │ CALCULATE DISTANCE COMPONENTS││    ║
        ║   │ AND PRE-MODELING PIXEL       ││    ║
        ║   │ POSITIONS WHICH CORRESPOND   ││    ║
        ║   │ TO POST-MODELING PIXEL       ││    ║
        ║   │ POSITIONS                    ││    ║
        ║   └──────────────────────────────┘│    ║
        ║                                   │    ║
        ║  MODELING BLOCK                   │    ║
        ╚═══════════════════════════════════╪════╝
```

WITHIN TARGET AREA? 201

NO

YES 202

CALCULATE DISTANCE COMPONENTS AND PRE-MODELING PIXEL POSITIONS WHICH CORRESPOND TO POST-MODELING PIXEL POSITIONS

MODELING BLOCK

STORE DISTANCE COMPONENTS AND PRE-MODELING PIXEL POSITIONS 203

READ POST-MODELING PIXEL COLOR DATA 204

CALCULATE POST-SHADING COLOR DATA (ADD COLOR DATA AND SHADING VALUES 206A

RENDERING BLOCK

OUTPUT POST-SHADING COLOR DATA

# FIG.13

# FIG.14

```
          START
            │
            ▼
    ┌─────────────────────────────────────────────┐  201
    │                                              │
    ◇          WITHIN TARGET AREA?          ◇────── NO ──┐
    │                                              │     │
    └──────────────────┬───────────────────────────┘     │
                      YES                                 │
                       │              202                 │
    ┌──────────────────▼───────────────────────────┐      │
    │ CALCULATE DISTANCE COMPONENTS AND            │      │
    │ PRE-MODELING PIXEL POSITIONS WHICH           │      │
    │ CORRESPOND TO POST-MODELING PIXEL            │      │
    │ POSITIONS                                    │      │
    └──────────────────┬───────────────────────────┘      │
                       │                                  │
    MODELING BLOCK     │                                  │
                       │◄─────────────────────────────────┘
    ┌──────────────────▼───────────────────────────┐
    │ STORE DISTANCE COMPONENTS AND                │  203
    │ PRE-MODELING PIXEL POSITIONS                 │
    └──────────────────┬───────────────────────────┘
    ┌──────────────────▼───────────────────────────┐
    │ READ POST-MODELING PIXEL COLOR DATA          │  204
    └──────────────────┬───────────────────────────┘
    ┌──────────────────▼───────────────────────────┐
    │ READ SHADING VALUES                          │  205A
    └──────────────────┬───────────────────────────┘
    ┌──────────────────▼───────────────────────────┐
    │ CALCULATE POST-SHADING COLOR DATA            │  206
    │ (ADD COLOR DATA AND SHADING VALUES)          │
    └──────────────────┬───────────────────────────┘
    RENDERING BLOCK    │
                       │
    ┌──────────────────▼───────────────────────────┐
    │ OUTPUT POST-SHADING COLOR DATA               │
    └──────────────────────────────────────────────┘
```

# FIG.15

SCREEN